(19) Europäisches Patentamt
European Patent Office
Office européen des brevets

(11) EP 3 397 809 B1

(12) FASCICULE DE BREVET EUROPEEN

(45) Date de publication et mention de la délivrance du brevet:
**07.04.2021 Bulletin 2021/14**

(21) Numéro de dépôt: **16831575.2**

(22) Date de dépôt: **27.12.2016**

(51) Int Cl.:
***D21H 17/02*** (2006.01) ***D21H 17/22*** (2006.01)
***D21H 17/24*** (2006.01) ***D21H 21/28*** (2006.01)
***C08B 37/08*** (2006.01) ***C08L 5/08*** (2006.01)

(86) Numéro de dépôt international:
**PCT/FR2016/053673**

(87) Numéro de publication internationale:
**WO 2017/115047 (06.07.2017 Gazette 2017/27)**

# (54) UTILISATION DE POLYMERES POUR LA FIXATION DE COLORANT ET PROCEDE DE FABRICATION D'UN SUPPORT FIBREUX METTANT EN OEUVRE CES POLYMERES

VERWENDUNG VON POLYMEREN ZUR FIXIERUNG EINES FARBSTOFFES UND VERFAHREN ZUR HERSTELLUNG EINES FASERIGEN TRÄGERS MIT DIESEN POLYMEREN

USE OF POLYMERS FOR FIXING A DYE, AND METHOD FOR THE PRODUCTION OF A FIBROUS SUPPORT BY MEANS OF SAID POLYMERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **28.12.2015 FR 1563401**

(43) Date de publication de la demande:
**07.11.2018 Bulletin 2018/45**

(73) Titulaires:
- **Colorey**
**69380 Lozanne (FR)**
- **Université Claude Bernard Lyon 1**
**69622 Villeurbanne, Cedex (FR)**
- **Centre National de la Recherche Scientifique**
**75794 Paris Cedex 16 (FR)**
- **Institut National des Sciences Appliquées de Lyon**
**69100 Villeurbanne (FR)**
- **UNIVERSITE JEAN MONNET**
**42023 Saint Etienne Cédex 2 (FR)**

(72) Inventeurs:
- **DELAIR, Thierry**
**69700 Echalas (FR)**
- **TROMBOTTO, Stéphane**
**38790 Diemoz (FR)**
- **DAVID, Laurent**
**69004 Lyon (FR)**
- **CHAILLON, Pascal**
**01390 Tramoyes (FR)**
- **REVIRON, Séverine**
**69290 Saint Genis Les Ollieres (FR)**
- **ALTOUNIAN, Anaïs**
**69100 Villeurbanne (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A1-03/010206** **WO-A1-2004/035925**
**WO-A1-2007/054452** **US-A1- 2001 003 778**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE DE L'INVENTION

La présente invention a trait à l'utilisation d'un polymère en tant qu'agent fixateur de colorant dans un procédé de fabrication de papier.

### ÉTAT ANTÉRIEUR DE LA TECHNIQUE

Dans l'industrie papetière, les agents fixateurs de colorant sont bien connus de l'homme du métier notamment dans les domaines du papier hygiénique, du papier de restauration, du papier décoratif, du papier à lettre, etc.

De manière générale, les agents fixateurs les plus utilisés sur le marché sont des composés de synthèse, plus particulièrement des polymères synthétiques.

A titre d'exemple, le document WO 2007/054452 décrit un procédé pour colorer du papier en surface en deux étapes. La première étape consiste à traiter la surface du papier avec un colorant soluble dans l'eau. La seconde étape consiste à traiter la surface du papier avec un polymère synthétique en tant qu'agent de fixation.

On peut également citer le document WO 2004/035925 qui décrit un procédé pour colorer du papier en appliquant sur celui-ci une composition contenant un agent de coloration, un liant et éventuellement un agent de fixation. L'agent de coloration peut être un colorant ou un pigment. En revanche, la nature de l'agent de fixation n'est pas précisée si ce n'est qu'il s'agit d'un agent cationique.

Le document WO 2003/010206 décrit un polysaccharide sur lequel est greffé un polymère synthétique. Ce polysaccharide greffé permet de combiner la capacité d'un polysaccharide à adhérer à des fibres de cotons et la capacité des polymères synthétiques à fixer un colorant.

A la connaissance du Demandeur, le catiofast® est couramment utilisé en tant qu'agent fixateur de colorant. Le catiofast® est produit et commercialisé par la compagnie BASF. Il s'agit plus précisément d'une polyéthylèneimine (CAS 9002-98-6) (IUPAC poly(iminoéthylène)) présentant l'unité de répétition suivante : $-[CH_2CH_2NH-]_n$.

Eu égard à la nature synthétique de ce polymère, il présente de nombreux inconvénients relatifs à ses propriétés intrinsèques que sont sa toxicité, sa nocivité ou encore son impact néfaste sur l'environnement du fait de son caractère non dégradable.

Or, les matériaux utilisés dans l'industrie papetière sont régulièrement soumis à des contraintes de plus en plus strictes en termes de respect de l'environnement et de respect de la santé humaine.

Il existe donc un besoin manifeste de mettre au point des papiers colorés qui soient biodégradables, non toxiques et inoffensifs aussi bien pour l'homme que pour l'environnement.

Afin de remédier à ces problèmes, le Demandeur propose l'utilisation d'un composé naturel, plus particulièrement d'un polymère de type polysaccharide, en tant qu'agent fixateur de colorant au cours d'un procédé de fabrication du papier.

Les polysaccharides, en particulier ceux solubles dans l'eau, ont déjà été employés en tant qu'agent d'encollage pour papier dans le but d'obtenir un papier bon marché avec d'excellentes propriétés vis à vis de l'impression par jet d'encre et pour les papiers d'enregistrement comme décrit dans le document US 2001/0003778. En revanche les polysaccharides n'ont jamais été utilisés en tant qu'agent fixateur de colorant.

### EXPOSE DE L'INVENTION

La présente invention concerne l'utilisation d'au moins un polymère en tant qu'agent fixateur de colorant, dans un procédé de fabrication de papier.

Conformément à l'invention, ce polymère se caractérise en ce qu'il s'agit d'un polysaccharide, ledit polymère comportant plusieurs charges positives. Plus précisément, aucun polymère synthétique n'est greffé sur le polymère selon l'invention utilisé en tant qu'agent fixateur de colorant.

Compte tenu de la nature de l'agent fixateur de l'invention, on s'affranchit ainsi des inconvénients précités concernant la mise en œuvre des polymères de synthèse type « catiofast® ».

### I/ Le polymère

Le polymère est un polysaccharide.

Il s'agit en particulier d'un polysaccharide choisi dans le groupe comprenant le chitosane et ses dérivés.

Par « chitosane », on désigne tout copolymère linéaire de la N-acétyl-D-glucosamine et de la D-glucosamine liées par une liaison $\beta$-(1$\rightarrow$4) soluble en solution aqueuse de pH inférieur à 6,5, avantageusement strictement inférieur à 6,5.

Par « chitosane restant en solution quel que soit le pH », on désigne un « chitosane » présentant un degré de N-acétylation DA supérieur strictement à 40% et inférieur à 60 %.

La structure du chitosane correspond à la structure suivante de formule (I):

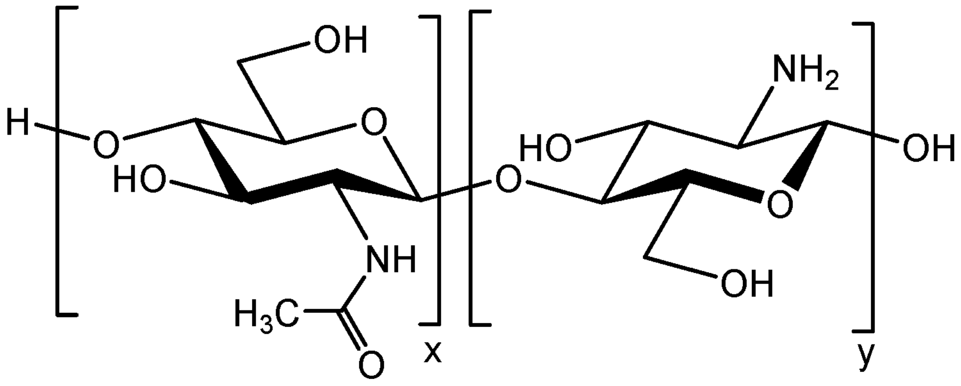

Le chitosane résulte de la désacétylation partielle de la chitine. Ainsi, on définit le chitosane par un degré de N-acétylation qui correspond à la fraction :

$$DA=(x/(x+y))*100$$

avec :

- x correspondant au nombre d'unités N-acétyl-D-glucosamine ;
- y correspondant au nombre d'unités D-glucosamine.

De même, par « dérivé de chitosane », on désigne un chitosane de degré de N-acétylation (DA exprimé en %) inférieur ou égal à 40%, plus avantageusement inférieur ou égal à 35%, qui est chimiquement modifié de manière à ce qu'il reste soluble en solution aqueuse de pH supérieur ou égal à 6,5. Par exemple, un chitosane dont la fonction amine est quaternarisée est un dérivé de chitosane au sens de l'invention.

En fonction du pH auquel le chitosane est utilisé, celui-ci ne reste pas toujours soluble en solution aqueuse. En particulier, le chitosane de DA inférieur ou égal à 40% reste soluble en solution aqueuse à pH strictement inférieur à 6,5 mais ne l'est plus à un pH supérieur ou égal à 6,5.

Par conséquent, le choix entre le chitosane ou ses dérivés dépend ainsi des conditions de pH dans lesquelles il est utilisé au cours du procédé de fabrication du papier.

En effet et de manière générale, le polymère peut être incorporé :

- soit directement dans le pulpeur avec la pâte à papier ;
- soit à la sortie de la machine à papier, une fois que la feuille de papier est formée.

A/ Dans le pulpeur :

Lorsque l'incorporation du polymère s'effectue dans le pulpeur, la suspension fibreuse présente un pH supérieur ou égal à 6,5.

Dans ces conditions, le chitosane doit rester soluble.

Selon l'invention, les possibilités pour modifier le chitosane dans le but de le maintenir soluble en solution aqueuse à pH égal ou supérieur à 6,5 sont les suivantes :

- par modification chimique :
    - ◦ par réaction de N-alkylation ;
    - ◦ par réaction d'O-alkylation ;
- par augmentation du DA du chitosane à une valeur supérieure à 40% par réaction de N-acétylation.

*a) N-alkylation :*

Une première voie pour maintenir le chitosane de degré de N-acétylation inférieur à 40 % soluble en solution aqueuse à pH égal ou supérieur à 6,5 est de le modifier par réaction de N-alkylation des unités D-glucosamine du chitosane.

La réaction de N-alkylation consiste à engendrer la substitution d'au moins un atome d'hydrogène (-H) de la fonction amine par un groupement alkyl afin d'apporter au moins une fonction ammonium quaternaire. Les chitosanes ayant subi une réaction de N-alkylation sont alors nommés « chitosanes N-alkylés ».

Différentes voies de synthèse pour réaliser une N-alkylation de la fonction amine des unités D-glucosamine du chitosane sont envisageables.

i/ Chitosane « N-alkylé par quaternarisation » :

Dans un premier mode de réalisation, on forme un chitosane « N-alkylé par quaternarisation ». Dans ce cas, le chitosane subit trois N-alkylations successives à l'aide d'un agent alkylant et c'est l'atome d'azote des unités D-glucosamine du chitosane qui porte la charge positive qui est indépendante du pH du milieu.

On désigne par « chitosanes N-alkylés par quaternarisation», les composés de formule (II):

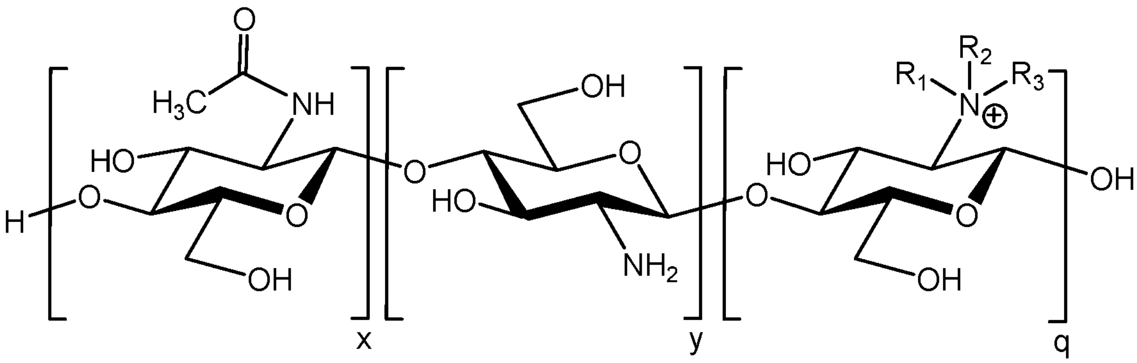

$R^1$, $R^2$ et $R^3$ étant indépendamment les uns des autres un groupement alkyl avec $R^1$, $R^2$ et $R^3$ pouvant être identiques, différents les uns des autres ou encore identiques deux à deux.

Plusieurs agents alkylants peuvent être utilisés pour la réaction de N-alkylation par quaternarisation tel que par exemple le sulfate de diméthyle (DMS) (CAS 77-78-1).

On définit le degré de N-alkylation par quaternarisation (DQ) par la relation suivante :

$$DQ = ((q)/(x+y+q))*100) ;$$

avec :

- x correspondant au nombre d'unités N-acétyl-D-glucosamine ;
- y correspondant au nombre d'unités D-glucosamine ;
- q correspondant au nombre d'unités D-glucosamine quaternarisées.

Le degré de N-alkylation par quaternarisation du chitosane est avantageusement compris entre 5 % et 95 %, plus avantageusement compris entre 25 et 55%, de préférence compris entre 30 et 40%.

Selon un mode de réalisation particulier, le chitosane N-alkylé par quaternarisation est le N,N,N-triméthyl-chitosane, si et seulement si $R^1=R^2=R^3=-CH_3$.

ii/ Chitosane « N-alkylé » par un groupement alkyl portant une charge positive :

Dans un second mode de réalisation, on forme un chitosane N-alkylé par au moins un groupement hydrocarboné comprenant au moins une charge positive. Dans ce cas, le groupement alkyl nouvellement lié sur l'atome d'azote des unités D-glucosamine porte la charge positive.

On désigne par chitosanes « N-alkylés par l'ajout d'au moins un groupement alkyl portant au moins une charge positive », les composés de formule (III) :

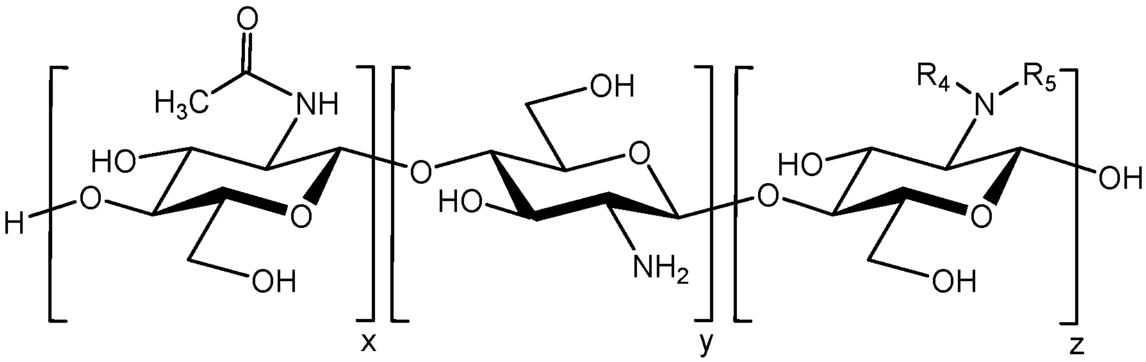

$R^4$ et $R^5$ étant indépendamment l'un de l'autre, un atome d'hydrogène ou un groupe hydrocarboné portant au moins une charge positive, avec $R^4$ et $R^5$ n'étant jamais simultanément un atome d'hydrogène, mais $R^4$ et $R^5$ pouvant être simultanément un groupement alkyle dont au moins un des deux est porteur d'une charge positive indépendante du pH.

Dans ce cas, la N-alkylation du chitosane est une réaction d'alkylation consistant à substituer au moins un atome H présent sur la fonction $-NH_2$ des unités D-glucosamine par un groupement hydrocarboné qui présente au moins une fonction amine quaternaire.

De manière avantageuse, quand $R^4$ est un groupe hydrocarboné comprenant un groupement amine quaternaire alors $R^5$ est un atome d'hydrogène et inversement.

On définit alors la notion de degré de N-alkylation par ajout d'un groupement alkyl portant au moins une charge positive (DSN) par la relation suivante :

$$DSN = ((z)/(x+y+z))*100)$$

avec

- x correspondant au nombre d'unités N-acétyl-D-glucosamine;
- y correspondant au nombre d'unités D-glucosamine ; et
- z correspondant au nombre d'unités D-glucosamine N-alkylées par l'ajout d'un groupement alkyl portant au moins une charge positive.

Le degré de N-alkylation DSN est compris entre 1% et 99%, avantageusement compris entre 10 et 90%, de préférence entre 25 et 85%.

Plusieurs agents N-alkylants peuvent être utilisés pour cette réaction de N-alkylation tel que par exemple le chlorure de glycidyltriméthylammonium (GTMAC) (CAS 3033-77-0).

Dans ce cas, l'agent de modification N-alkylant est avantageusement un sel dont la nature de l'anion (contre ion) est choisie dans le groupe comprenant de manière non limitative les halogènes. Avantageusement, le contre-ion est choisi parmi les ions chlorures ($Cl^-$), bromures ($Br^-$), iodures ($I^-$).

De manière non limitative, l'agent de modification N-alkylant est choisi dans le groupe comprenant :

- le chlorure de glycidyltriméthylammonium (R = méthyl), le chlorure de glycidyltriéthylammonium (R = éthyl), le chlorure de glycidyltripropylammonium (R = propyl), et toutes les combinaisons possible avec R étant choisi parmi le groupement méthyl, éthyl, propyl et toutes les combinaisons des sels de bromure et de iodure correspondants,
- le chlorure de 3-chloro-2-hydroxypropyltriméthylammonium, le chlorure de 3-chloro-2-hydroxypropyltriéthylammonium, le chlorure de 3-chloro-2-hydroxypropyltripropylammonium, et toutes combinaisons de composés avec le groupement R choisi parmi méthyl, éthyl, propyl ; et les sels de bromure et iodure correspondants,
- $[Cl-(CH_2)_2-N(CH_3)_3]^+$, $Cl^-$ = le chlorure de (2-Chloroethyl)trimethylammonium, $[Br-(CH_2)_2-N(CH_3)_3]^+$ , $Cl^-$ = le chlorure de (2-Bromoethyl)trimethylammonium, $[HOOC-(CH_2)_3-N(CH_3)_3]^+$ , $Cl^-$ = le chlorure de 3-carboxypropyl-trimethyl-ammonium ; et les sels de bromure et iodure correspondants.

Dans le cas où l'agent N-alkylant utilisé est le GTMAC, le chitosane est alors dénommé chitosane-GTMAC.

Dans un mode réalisation avantageux, le chitosane est un sel de N-[(2-hydroxy-3-trimethylammonium)propyl] chitosane.

b) O-alkylation :

Une deuxième voie pour maintenir le chitosane de degré de N-acétylation inférieur à 40 % soluble à pH égal ou supérieur à 6.5 est de le modifier par réaction d'O-alkylation de la fonction -OH des unités D-glucosamine ou des unités N-acétyl-D-glucosamine du chitosane.

En d'autres termes, au cours de la réaction d'O-alkylation, un atome d'hydrogène -H de la fonction hydroxyle est substitué par un groupement alkyl portant une charge positive qui est indépendante de la valeur du pH.

On désigne par chitosane « O-alklé » les composés de formule (IV) :

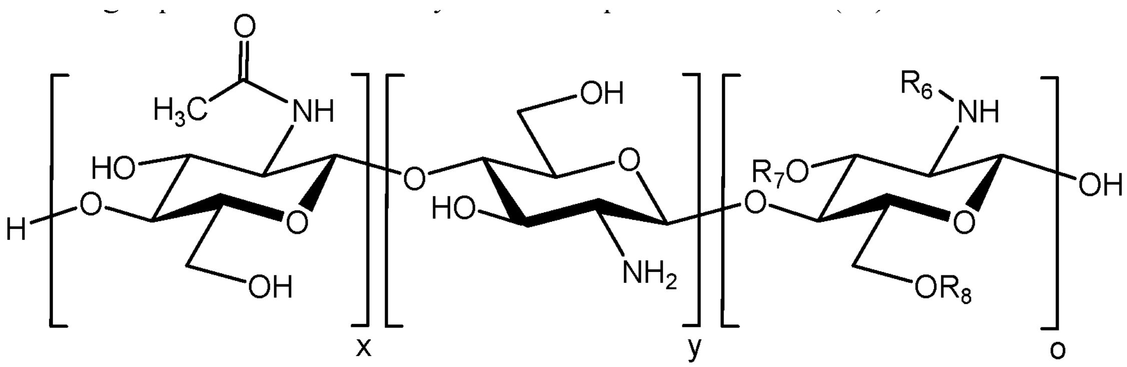

Dans ce cas, $R^6$ est soit un groupement acétyle caractéristique des unités N-acétyl-D-Glucosamine, soit un atome d'hydrogène caractéristique de la fonction amine des unités D-glucosamine du chitosane.

$R^7$ et $R^8$ étant indépendamment l'un de l'autre, un atome d'hydrogène ou un groupe hydrocarboné portant au moins une charge positive, avec $R^7$ et $R^8$ n'étant jamais simultanément un atome d'hydrogène.

On définit alors la notion de degré d'O-alkylation (DSo) comme étant la proportion de motifs de répétition (GlcN ouGlcNac) qui sont O-Alkylés avec: par la relation suivante :

$$DSo = ((o)/(x+y+o))*100)$$

avec :

- x correspondant au nombre d'unités N-acétyl-D-glucosamine;
- y correspondant au nombre d'unités D-glucosamine ; et
- o correspondant au nombre d'unités D-glucosamine ou N-acétyl-D-glucosamine « O-alkylées ».

c) N-acétylation :

Comme déjà expliqué, le chitosane de DA inférieur à 40% est insoluble en milieux aqueux pour une valeur de pH supérieure ou égale à 6,5. Ainsi pour le maintenir soluble en solution aqueuse, une troisième voie consiste à augmenter son DA par une réaction de N-acétylation.

Ainsi selon un troisième mode de réalisation, le polysaccharide est un chitosane dont le degré de N-acétylation est compris entre 40% et 70%, préférentiellement compris strictement entre 40 et 60%.

La réacétylation se déroule en phase, de préférence homogène, et conduit à la N-acétylation aléatoire des fonctions amine des unités D-glucosamine sur l'ensemble de la chaîne polymère constitutive du chitosane.

Suite à la réacétylation, ce chitosane reste donc soluble en milieu aqueux pour des valeurs de pH supérieures ou égales à 6,5.

La réacétylation peut s'effectuer en présence d'anhydride acétique (CAS 108-24-7) en milieu hydro-alcoolique (50 % eau/ 50 % 1,2-propanediol).

B/ Après formation du support fibreux cellulosique :

Dans un second mode de réalisation, le polymère est introduit après formation de la feuille de papier. L'ajout du polymère peut être réalisé avantageusement par couchage. Dans ces conditions, il n'y a plus de contraintes liées au pH. En effet, en fonction de la valeur du pH de la solution de couchage, l'homme du métier sera capable de choisir le chitosane approprié, c'est-à-dire le chitosane demeurant soluble dans les conditions de couchage.

Economiquement, il sera avantageux de mettre en œuvre un chitosane qui est soluble à un pH strictement inférieur à 6,5, ne nécessitant donc pas d'être modifié.
Néanmoins il sera possible de mettre en œuvre les chitosanes N-alkylés, O-alkylés et N-acétylés décrits précédemment.

**II/ Colorant(s) :**

Le colorant peut être un colorant anionique, naturel ou synthétique. Bien entendu, le choix de la nature du colorant est fonction de l'application visée.
Le colorant est choisi dans le groupe comprenant les extraits végétaux, les colorants alimentaires synthétiques et naturels.
Dans le cas des colorants alimentaires, il s'agit des colorants codés E, par exemple ceux correspondant aux législations :

- règlement (CE) N° 1333/2008 du Parlement Européen et du Conseil du 16 décembre 2008 sur les additifs alimentaires ;
- règlement (UE) N° 231/2012 de la Commission du 9 mars 2012, établissant les spécifications des additifs alimentaires énumérés aux annexes II et III du règlement (CE) N° 1333/2008 du Parlement Européen et du Conseil.

**III/ Procédé de fabrication d'un papier coloré à l'aide d'un agent fixateur tel que décrit précédemment :**

L'invention concerne également un procédé de fabrication du papier comprenant les étapes suivantes :

a) préparation d'une suspension aqueuse fibreuse ;
b) formation d'une feuille de papier à partir de la suspension aqueuse fibreuse ;
c) séchage au moins partiel de la feuille de papier ainsi formée ;

le procédé comprenant, en outre, une étape d'addition d'un polymère (POL) tel que décrit précédemment et une étape d'addition d'un colorant (COL).
Au demeurant, des étapes additionnelles de séchage peuvent être réalisées respectivement à la suite des étapes POL et/ou COL.
Chacune des étapes est décrite plus en détails par la suite. Les étapes d'addition de polymère et de colorant peuvent être réalisées soit avant ou après l'étape b) de formation avant ou après l'étape c) de séchage. En outre, les étapes POL et COL peuvent être réalisées indépendamment l'une de l'autre ou concomitamment.
Dans un premier temps, l'étape a) consiste à préparer une suspension aqueuse à base de fibres cellulosiques.
Initialement, la pâte dite brute peut se présenter sous forme de balles, de matières en vrac ou dans le cas d'usines intégrées, de suspensions.
Au cours de cette étape a), la suspension de fibres subit dans un premier temps un tamisage consistant à séparer les substances indésirables des fibres cellulosiques. Dans un second temps, une épuration permet de séparer les impuretés de la suspension de fibres sous l'effet de la force centrifuge.
Par ailleurs, à l'issue de l'étape a), la suspension aqueuse ainsi obtenue peut également intégrer des charges, additifs, ou autres composés chimiques destinés à conférer des propriétés mécaniques et physico-chimiques caractéristiques de l'application visée.
L'étape a) peut s'effectuer avant passage dans la machine à papier ou au sein même de celle-ci.
A partir de son introduction dans la machine à papier, la suspension aqueuse est transformée de manière à former une feuille de papier à base de fibres cellulosiques. Globalement la machine à papier consiste en un large dispositif d'égouttage qui est muni d'une caisse de tête permettant de distribuer la suspension de fibres sur une section toile.
La feuille de papier est formée (étape b) sur cette section toile grâce à un phénomène d'égouttage qui a lieu sur au moins une des faces du papier en train de se former.
Une fois que la feuille est suffisamment résistante pour pouvoir être séparée de la section toile, elle peut éventuellement subir une étape de pressage.
Dans tous les cas, la feuille de papier formée subit ensuite une étape c) de séchage de la feuille qui est au moins partiel.
Deux autres étapes POL et COL, d'addition du polymère et d'addition d'un colorant respectivement, sont effectuées au cours du ce procédé de fabrication du papier.
Dans un premier mode de réalisation, les étapes POL et COL sont réalisées une fois la feuille formée éventuellement au moins partiellement séchée. Dans ce cas, les étapes POL et COL consistent en un couchage. Dans ce

cas, le polymère et le colorant sont mis en œuvre dans des solutions dites « de couchage » avantageusement à l'état liquide.

Les sauces de couchage peuvent avantageusement comprendre des liants, des pigments, des additifs spécifiques du papier et permettent de conférer au papier des propriétés mécaniques et physico-chimiques renforcées.

Le couchage peut être effectué au moyen de rouleaux pouvant être à lame d'air, à presse d'encollage, à lames ou à barres qui permettent de garantir un couchage d'épaisseur uniforme sur l'intégralité de la feuille de papier. Le couchage peut être effectué sur l'une ou les deux faces de la feuille.

Globalement, l'étape POL de fixation consiste à obtenir un papier sur lequel est fixé un polymère naturel tandis que l'étape COL consiste à colorer le papier. L'étape de coloration COL est avantageusement réalisée après l'étape POL de fixation du polymère naturel. En d'autres termes, on couche une première composition contenant le fixateur puis une seconde composition contenant le colorant. Dans un autre mode de réalisation, on couche une seule composition comprenant le fixateur et le colorant.

Selon un second mode de réalisation, l'étape POL d'ajout du polymère est réalisée avant l'étape b) de formation de la feuille de papier.

En d'autres termes, le polymère est introduit dans le pulpeur avant même que la feuille de papier ne soit formée.

Selon un mode de réalisation particulier, l'étape POL est réalisée avant l'étape b) tandis que l'étape COL est, quant à elle, réalisée après l'étape b).

Selon une autre caractéristique, la feuille de papier obtenue à l'issue du procédé présente avantageusement un grammage compris entre 5 g/m$^2$ et 900 g/m$^2$.

Bien entendu, le grammage du papier est également fonction de l'application visée donc de l'industrie papetière impliquée.

L'invention et les avantages qui en découlent ressortiront mieux des figures et exemples suivants donnés afin d'illustrer l'invention et non de manière limitative.

## DESCRIPTION DES FIGURES

La figure 1 est un graphique représentant l'évolution de la quantité de colorant E122 relarguée en fonction du temps d'un échantillon de papier 14 g/m$^2$ préformé (4 cm$^2$), ayant subi un trempage dans une solution de chitosane (DA=51 %) à 0.1 % ; 0.5 % ou 1 % m/v pendant 5 min, suivi après séchage, d'une application de colorant E122 à 0.1 % m/v.

La figure 2 est un graphique représentant l'évolution de la quantité de colorant E122 relarguée en fonction du temps d'un échantillon de papier 14 g/m$^2$ préformé (4 cm$^2$), ayant subi un trempage dans une solution de chitosane (DA=1 %) à 0.1 % ; 0.5 % ou 1 % m/v pendant 5 min, suivi après séchage, d'une application de colorant E122 à 0.1 % m/v.

La figure 3 est un graphique représentant l'évolution de la quantité de colorant E122 relarguée en fonction du temps d'un échantillon de papier 14 g/m$^2$ préformé (4 cm$^2$), ayant subi un trempage dans une solution de N, N, N-triméthyl chitosane (DQ=33 %) à 0.1 % ; 0.5 % et 1 % m/v pendant 5 min, suivi après séchage, d'une application de colorant E122 à 0.1 % m/v.

La figure 4 est un graphique représentant l'évolution de la quantité de colorant E122 relarguée en fonction du temps d'un échantillon de papier 14 g/m$^2$ préformé (4 cm$^2$), ayant subi un trempage dans une solution de chitosane-GTMAC (DSN=79 %) à 0.1 % ; 0.5 % et 1 % m/v pendant 5 min, suivi après séchage, d'une application de colorant E122 à 0.1 % m/v.

La figure 5 est un graphique représentant l'évolution de la quantité de colorant E133 relarguée en fonction du temps d'un échantillon de papier 14 g/m$^2$ préformé (4 cm$^2$), ayant subi un trempage dans une solution de N, N, N-triméthyl chitosane (DQ=33 %) à 0,1 % ; 0,5 % et 1 % m/v pendant 5 min, suivi après séchage, d'une application de colorant E133 à 0.1 % m/v.

La figure 6 est un graphique représentant l'évolution de la quantité de colorant E122 relarguée en fonction du temps d'un échantillon de papier 14 g/m$^2$ préformé (4 cm$^2$), ayant subi un trempage dans une solution de chitosane (DA=51%) à 0.1 % m/v pendant 5 min ; 20 min ; 60 min ou 480 min, suivi après séchage, d'une application de colorant E122 à 0.1 % m/v.

La figure 7 est un graphique représentant l'évolution de la quantité de colorant E122 relarguée en fonction du temps d'un échantillon de papier 14 g/m$^2$ préformé (4 cm$^2$), ayant subi un trempage dans une solution de chitosane

(DA=51%) à 1 % m/v pendant 5 min ; 20 min ; 60 min ou 480 min, suivi après séchage, d'une application de colorant E122 à 0.1 % m/v.

La figure 8 est un graphique représentant l'évolution de la quantité de colorant E122 relarguée en fonction du temps d'un échantillon de pulpe de papier (0.3 g), ayant subi une imprégnation d'une solution de N, N, N-triméthyl chitosane (DQ=33 %) à 0,5% m/v, suivi d'une coloration par l'ajout de 10 mg de colorant E122.

Dans les exemples suivants, on a mesuré la capacité des polymères de l'invention à fixer le colorant au moyen d'un test de relargage. Ce test consiste à plonger le papier imbibé de fixateur et de colorant E122 ou E133 dans un volume d'eau de 5 mL pour un papier préformé ou 10 mL pour de la pulpe de papier. Le relargage est évalué par spectrométrie visible à la longueur d'onde où l'absorbance est maximale, par mesure de l'absorbance de prélèvements de 80 μL effectués au cours du temps. La mesure est faite à 520 nm en présence du colorant E122. La mesure est faite à 630 nm en présence du colorant E133.

## EXEMPLE 1 : ESSAIS RÉALISÉS SUR DU PAPIER PRÉFORMÉ

Les caractéristiques des solutions réalisées sont données ci-dessous :

- solution de colorant E122 (carmoisine) à 0.1 % m/v dans de l'eau permutée ;
- solution de colorant E133 (bleu brillant) à 0.1 % m/v dans de l'eau permutée ;
- solution aqueuse acide de chitosane (DA=51 %) ;
- solution aqueuse acide de chitosane (DA=1 %) ;
- solution aqueuse de N, N, N-triméthyl chitosane (DQ=33 %);
- solution aqueuse de chitosane-GTMAC (DSN=79 %).

Le support papier mis en œuvre est du papier présentant un grammage de 14 g/m$^2$.

a/Influence de la concentration :

On analyse dans cet exemple les concentrations nécessaires de fixateurs qui permettent de fixer le colorant.

Cas du colorant E122 (carmoisine) à 0,1 % m/v relargué dans l'eau permutée.

Les solutions suivantes sont testées aux concentrations 0.1 %, 0.5 % et 1% m/v :

- solution de chitosane (DA=51 %) ;
- solution de chitosane (DA=1 %) ;
- solution de N, N, N-triméthyl chitosane (DQ= 33 %) ;
- solution de chitosane-GTMAC (DSN=79 %).

Les résultats apparaissent sur les figures 1 à 4.
On constate que pour chaque fixateur, la quantité de colorant E122 relarguée diminue lorsque la concentration en fixateur augmente.

Cas du colorant E133 [bleu brillant] à 0.1% (w/v) relargué dans l'eau permutée.

La solution de N, N, N-triméthyl chitosane (DQ= 33 %) est testée aux concentrations 0.1%, 0.5% et 1 % m/v.
Les résultats apparaissent sur la figure 5.
On constate que pour ce fixateur, la quantité de colorant E133 relarguée diminue lorsque la concentration en fixateur augmente.

b/Influence du temps d'imprégnation :

On prépare deux solutions de chitosane (DA=51%) présentant respectivement une concentration de 0.1 % et 1% m/v. On fait varier le temps d'imprégnation de la solution sur la feuille de papier. Les temps d'imprégnation sont 5 min, 20min, 60 min et 480 min.
Sur la base des figures 6 et 7, on observe que le temps d'imprégnation du chitosane sur la feuille de papier n'a pas d'influence positive sur la quantité de matière en colorant E122 relarguée.

## EXEMPLE 2 : ESSAIS RÉALISÉ SUR DE LA PULPE DE PAPIER

- Soit on introduit 50 mg de N, N, N-triméthyl chitosane (DQ= 33 %) puis 10 mg E122 dans de l'eau permutée contenant déjà 0,3 g de pulpe de pâte à papier.

- Soit on introduit 0.3 g de pulpe de pâte à papier, puis 10 mg de colorant E122 dans une solution aqueuse de 50 mg de N, N, N-triméthyl chitosane.

- Soit on introduit 0.3 g de pulpe de pâte à papier, puis 50 mg de N, N, N-triméthyl chitosane et enfin 10 mg de E122 dans de l'eau permutée.

On effectue un test de relargage et on mesure l'absorbance de l'eau de relargage à 520 nm par spectrométrie visible.
Les résultats sont illustrés sur la figure 8.
On constate que pour ce fixateur, à une concentration de 0.5% m/v de fixateur, il n'y a pas d'absorbance à 520 nm. Par conséquent, il y a absence de relargage.

## Revendications

1. Utilisation d'au moins un polymère en tant qu'agent fixateur d'au moins un colorant dans un procédé de fabrication de papier, ledit polymère comportant plusieurs charges positives et étant un polysaccharide choisi dans le groupe comprenant :

   - le chitosane de degré de N-acétylation, dit DA, strictement supérieur à 40 % et inférieur à 70% ; et
   - le chitosane de DA inférieur ou égal à 40% et chimiquement modifié de manière à rester soluble en solution aqueuse à un pH supérieur ou égal à 6,5 ;

   le chitosane modifié chimiquement étant choisi dans le groupe comprenant les chitosanes N-alkylés par quaternarisation présentant un degré de quaternarisation compris entre 5 et 95% et les chitosanes N-alkylés par l'ajout d'au moins un groupement alkyl portant au moins une charge positive.

2. Utilisation selon la revendication 1, **caractérisée en ce que** le chitosane N-alkylé par quaternarisation présente un degré de quaternarisation compris entre 25 et 55%, de préférence compris entre 30 et 40%.

3. Utilisation selon l'une des revendications 1 ou 2 telle que le chitosane modifié chimiquement est le N, N, N-triméthyl chitosane.

4. Utilisation selon la revendication 1, **caractérisée en ce que** le degré de N-alkylation est compris entre 1 % et 99 %, avantageusement compris entre 10 et 90%, de préférence entre 25 et 85%.

5. Utilisation selon l'une des revendication 1 ou 4, **caractérisée en ce que** le chitosane est un chitosane N-alkylé par l'ajout d'un sel de N-[(2-hydroxy-3-trimethylammonium)propyl]chitosane.

6. Utilisation selon la revendication 1, **caractérisée en ce que** le chitosane présentant un degré de N-acétylation (DA) supérieur à 40% est obtenu par réaction de N acétylation du chitosane.

7. Utilisation selon l'une des revendications précédentes, **caractérisée en ce que** le colorant est choisi parmi :

   - les extraits végétaux ;
   - les colorants alimentaires synthétiques ;
   - les colorants alimentaires naturels.

8. Procédé de fabrication de papier comprenant les étapes suivantes :

   - préparation d'une suspension aqueuse fibreuse ;

- formation d'une feuille de papier à partir de la suspension aqueuse fibreuse
- séchage au moins partiel de la feuille de papier ainsi formée ;

**caractérisé en ce qu'**il comprend en outre, une étape POL d'addition d'un polymère défini selon l'une des revendications 1 à 7 et une étape COL d'addition d'un colorant défini selon la revendication 7.

**9.** Procédé selon la revendication 8, **caractérisé en ce que** l'étape POL précède l'étape COL.

## Patentansprüche

**1.** Verwendung mindestens eines Polymers als Fixiermittel mindestens eines Farbstoffs in einem Verfahren zur Papierherstellung, dabei enthält dieses Polymer mehrere positive Ladungen und ist ein Polysaccharid, ausgewählt aus der Gruppe mit:

- Chitosan, mit einem N-Acetylierungsgrad, DA genannt, deutlich über 40 % und unter 70%; und
- Chitosan mit einem DA kleiner oder gleich 40% und chemisch modifiziert, so dass es in einer wässrigen Lösung mit einem pH- Wert von größer oder gleich 6,5 lösbar bleibt,

das chemisch modifizierte Chitosan wird ausgewählt aus der Gruppe, zu der die durch Quaternisierung N-alkylierten Chitosane gehören, mit einem Quatemisierungsgrad zwischen 5 und 95% sowie die Chitosane, die durch Zugabe mindestens einer Alkylgruppe mit mindestens einer positiven Ladung N-alkyliert wurden.

**2.** Verwendung nach Anspruch 1, **dadurch gekennzeichnet, dass** das durch Quaternisierung N-alkylierte Chitosan einen Quatemisierungsgrad zwischen 25 und 55 % aufweist, vorzugsweise zwischen 30 und 40 %.

**3.** Verwendung nach einem der Ansprüche 1 oder 2 so, dass es sich bei dem chemisch modifizierten Chitosan um N, N, N-trimethyl- Chitosan handelt.

**4.** Verwendung nach Anspruch 1, **dadurch gekennzeichnet, dass** der N-Alkylierungsgrad zwischen 1 % und 99 %, liegt, vorteilhafterweise zwischen 10 und 90 %, noch besser zwischen 25 und 85 %.

**5.** Verwendung nach einem der Ansprüche 1 oder 4, **dadurch gekennzeichnet, dass** es sich bei dem Chitosan um ein durch Zugabe eines N-[(2-hydroxy-3-trimethylammonium)propyl]chitosan- Salzes N-alkyliertes Chitosan handelt.

**6.** Verwendung nach Anspruch 1, **dadurch gekennzeichnet, dass** das Chitosan mit einem N-Acetylierungsgrad (DA) von über 40°/0 durch N-Acetylierung des Chitosan hergestellt wird.

**7.** Verwendung nach einem der vorangehenden Ansprüche, **dadurch gekennzeichnet, dass** der Farbstoff ausgewählt wird aus

- pflanzlichen Extrakten,
- synthetischen Lebensmittelfarbstoffen,
- natürlichen Lebensmittelfarbstoffen.

**8.** Verfahren zur Papierherstellung, das aus den folgenden Schritten besteht:

- Herstellung einer wässrigen Fasersuspension;
- Bildung eines Papierbogens ausgehend von der wässrigen Fasersuspension
- zumindest teilweises Trocknen des so gebildeten Papierbogens,

**dadurch gekennzeichnet, dass** es außerdem einen POL- Schritt der Zugabe eines Polymers enthält, definiert nach einem der Ansprüche 1 bis 7 und einen COL-Schritt der Zugabe eines Farbstoffs, definiert nach Anspruch 7

**9.** Verfahren nach Anspruch 1, **dadurch gekennzeichnet, dass** der POL- Schritt vor dem COL- Schritt durchgeführt wird.

## Claims

1. Use of at least one polymer as a fixative agent for at least one dye in a paper production process, said polymer comprising several positive charges and being a polysaccharide selected from the group comprising:

    - chitosan with a degree of N-acetylation, termed DA, which is strictly more than 40 % and less than 70%; and
    - chitosan with a DA of less than or equal to 40% and chemically modified in a manner such as to remain soluble in aqueous solution at a pH greater than or equal to 6.5;

    the chemically modified chitosan being selected from the group comprising chitosans which are N-alkylated by quaternization having a degree of quaternization in the range 5% to 95% and chitosans which are N-alkylated by adding at least one alkyl group carrying at least one positive charge.

2. Use as claimed in claim 1, **characterized in that** the chitosan which is N-alkylated by quaternization has a degree of quaternization in the range 25% to 55%, preferably in the range 30% to 40%.

3. Use as claimed in claim 1 or claim 2, in which the chemically modified chitosan is N, N, N-trimethyl chitosan.

4. Use as claimed in claim 1, **characterized in that** the degree of N-alkylation is in the range 1% to 99%, advantageously in the range 10% to 90%, preferably in the range 25% to 85%.

5. Use as claimed in one of claims 1 or 4, **characterized in that** the chitosan is a chitosan which is N-alkylated by adding a salt of N-[(2-hydroxy-3-trimethylammonium)propyl]chitosan.

6. Use as claimed in claim 1, **characterized in that** the chitosan with a degree of N-acetylation (DA) of more than 40% is obtained by a reaction for N-acetylation of chitosan.

7. Use as claimed in one of the preceding claims, **characterized in that** the dye is selected from:

    - plant extracts;
    - synthetic food colourings;
    - natural food colourings.

8. A process for the production of paper, comprising the following steps:

    - preparing an aqueous fibrous suspension;
    - forming a sheet of paper from the aqueous fibrous suspension;
    - at least partially drying the sheet of paper which has thus been formed;

    **characterized in that** it further comprises a step POL for the addition of a polymer as defined in one of claims 1 to 7 and a step COL for the addition of a dye as defined in claim 7.

9. The process as claimed in claim 8, **characterized in that** the step POL precedes the step COL.

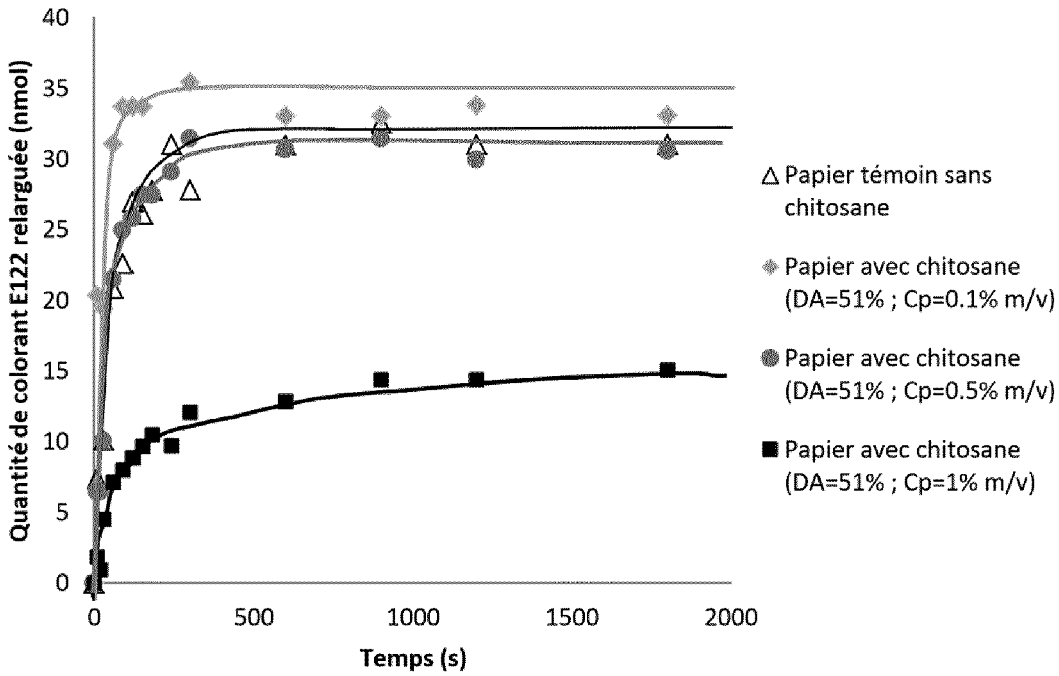


**Figure 1**

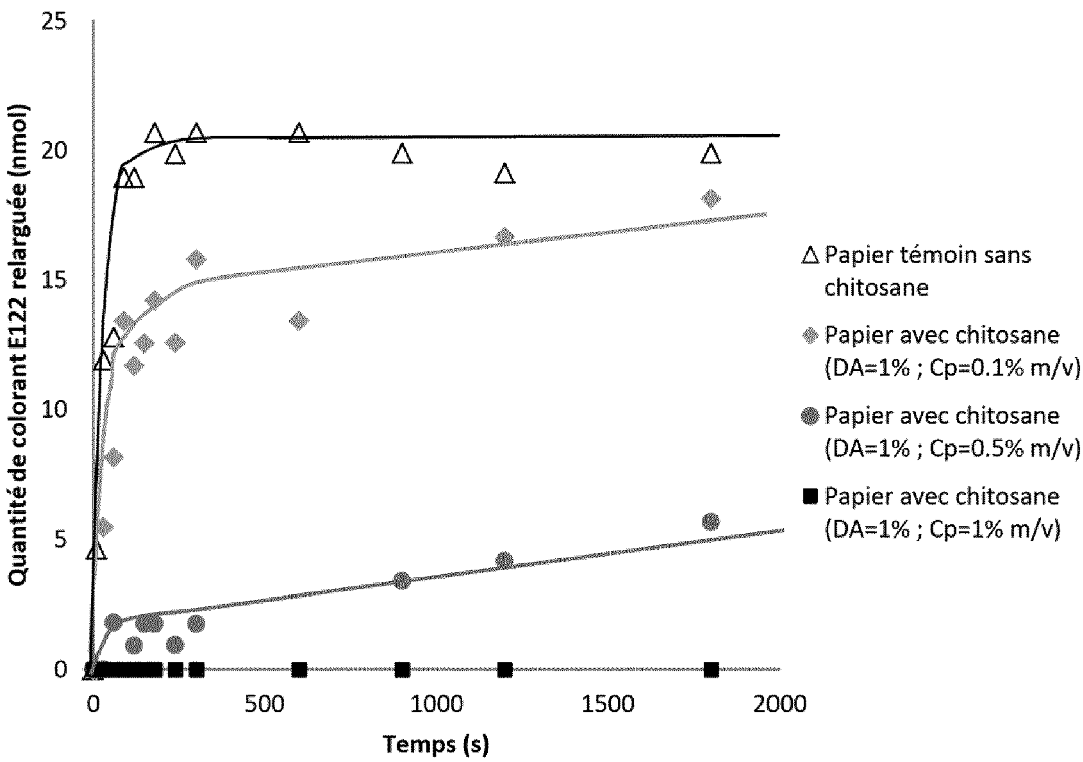


**Figure 2**

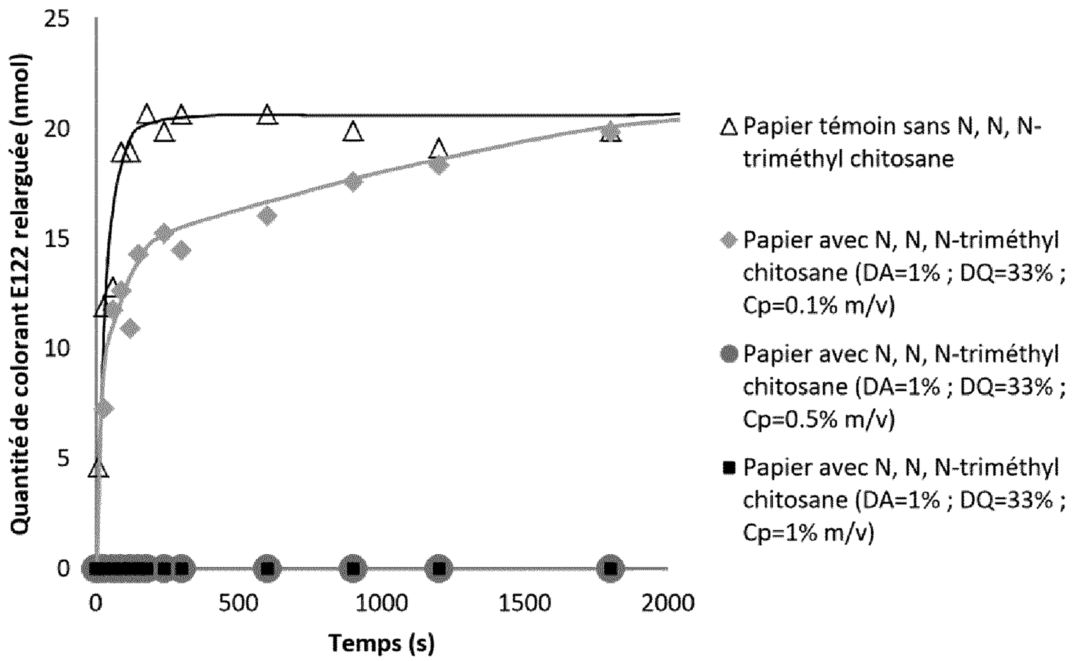


**Figure 3**

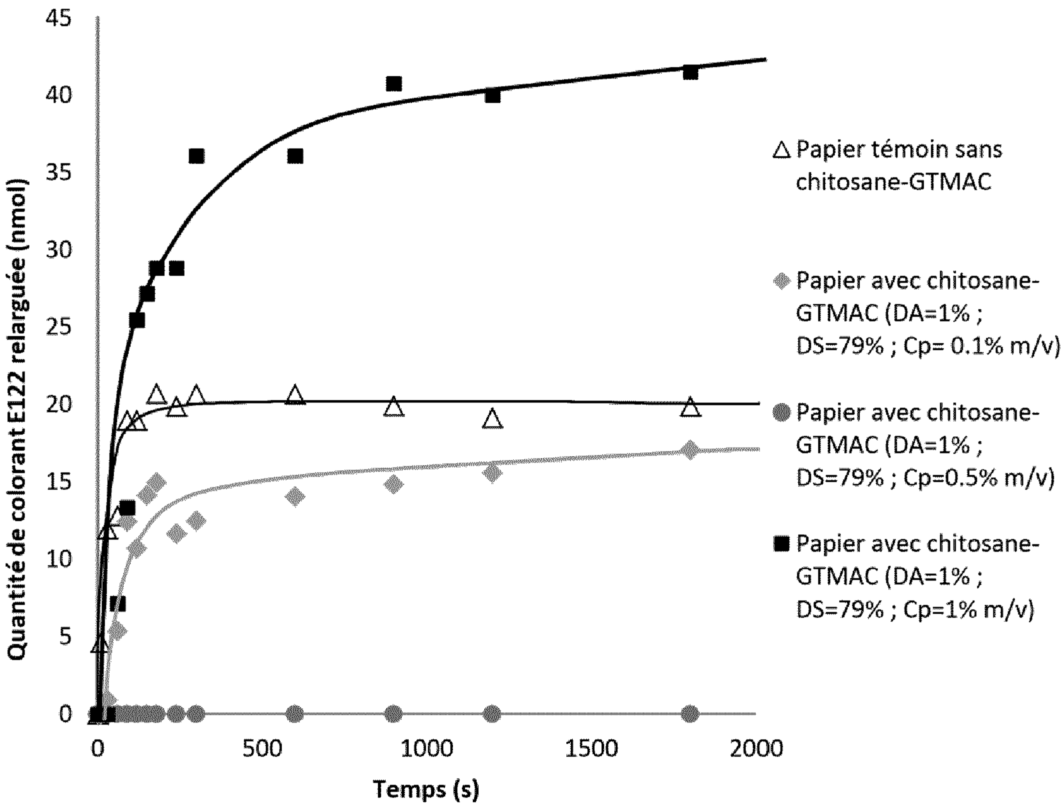


**Figure 4**

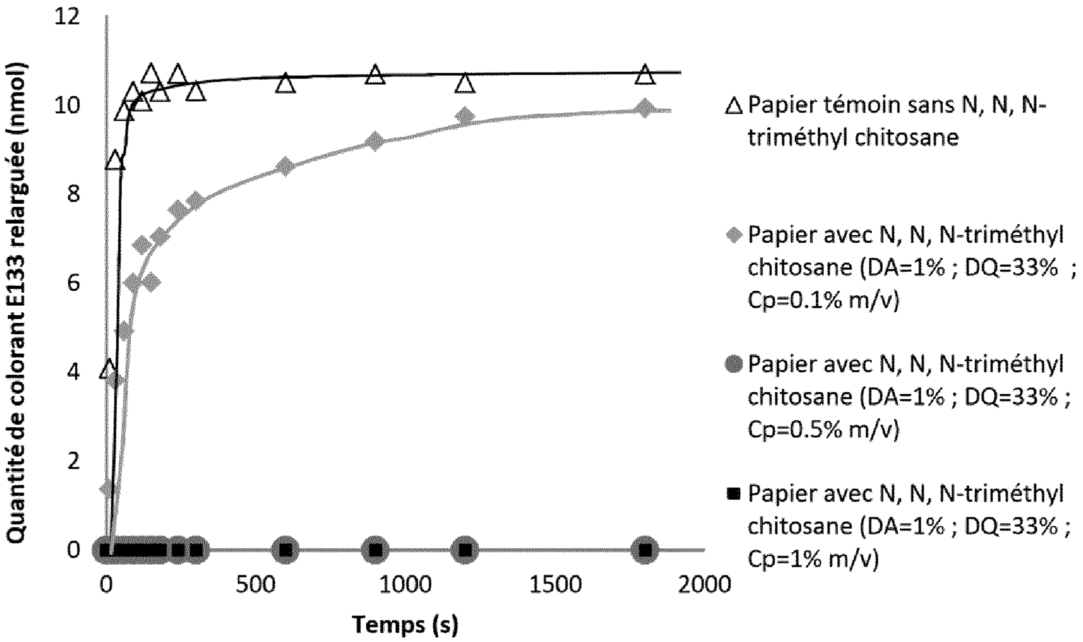


**Figure 5**

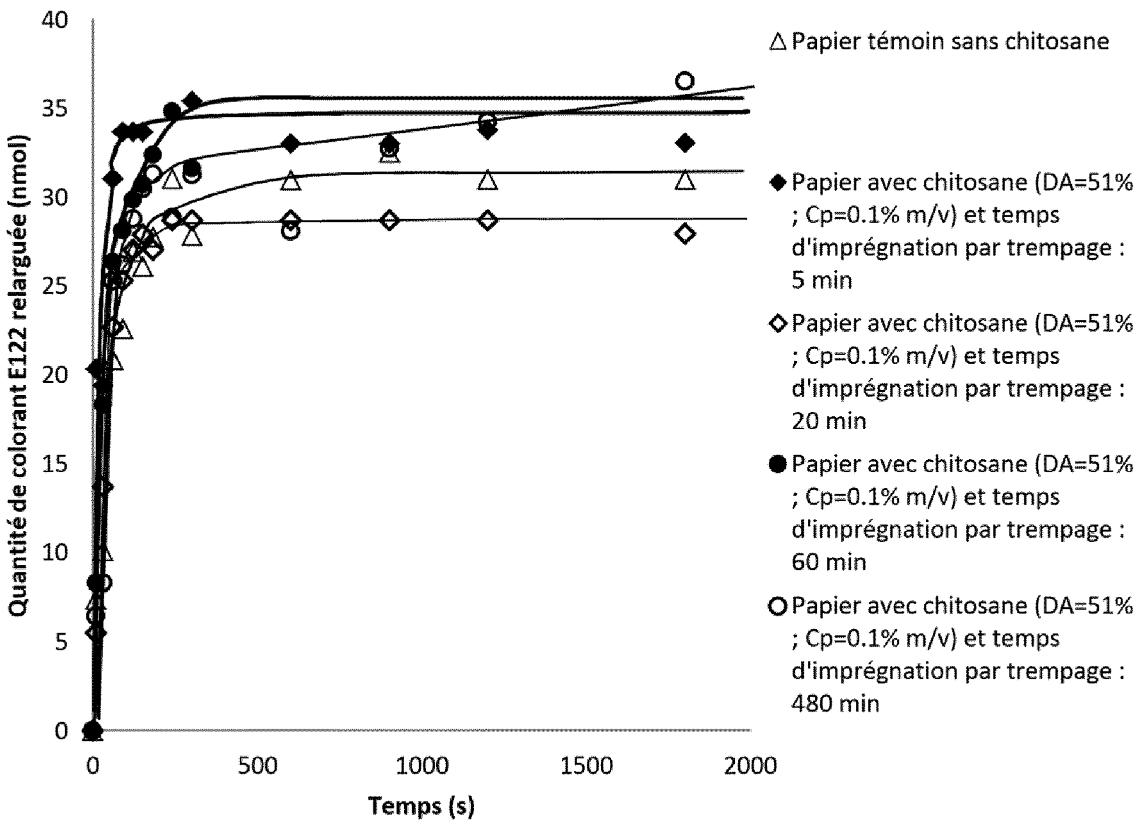


**Figure 6**

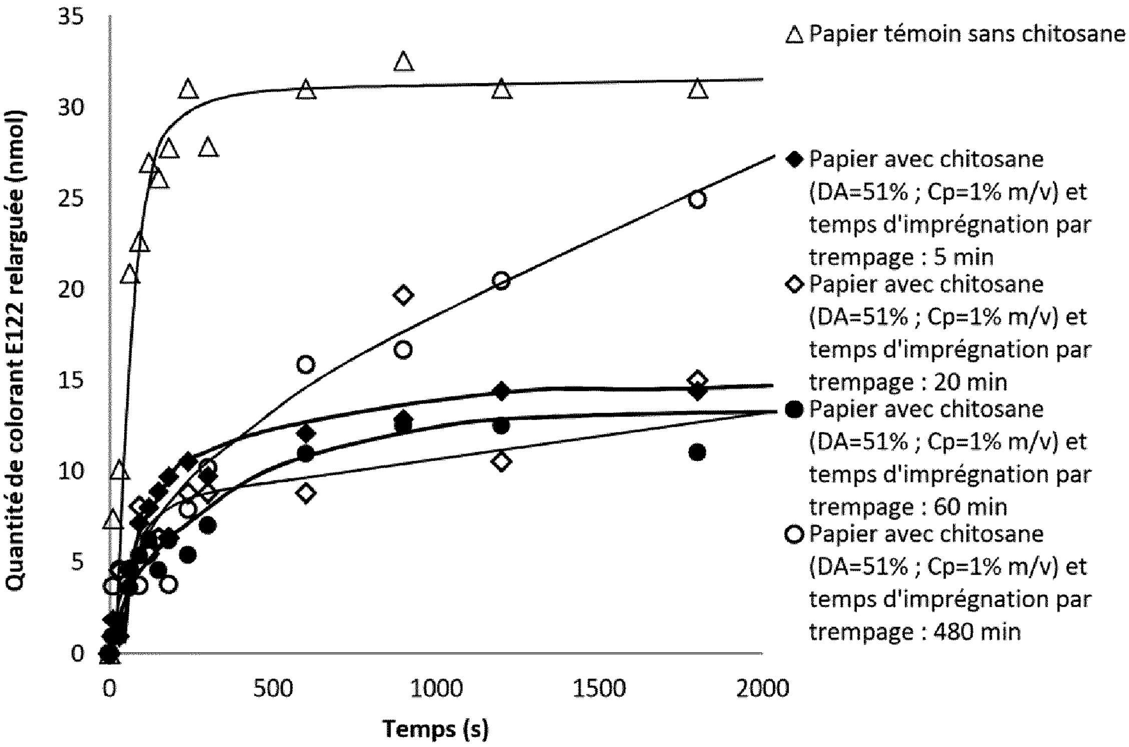


**Figure 7**

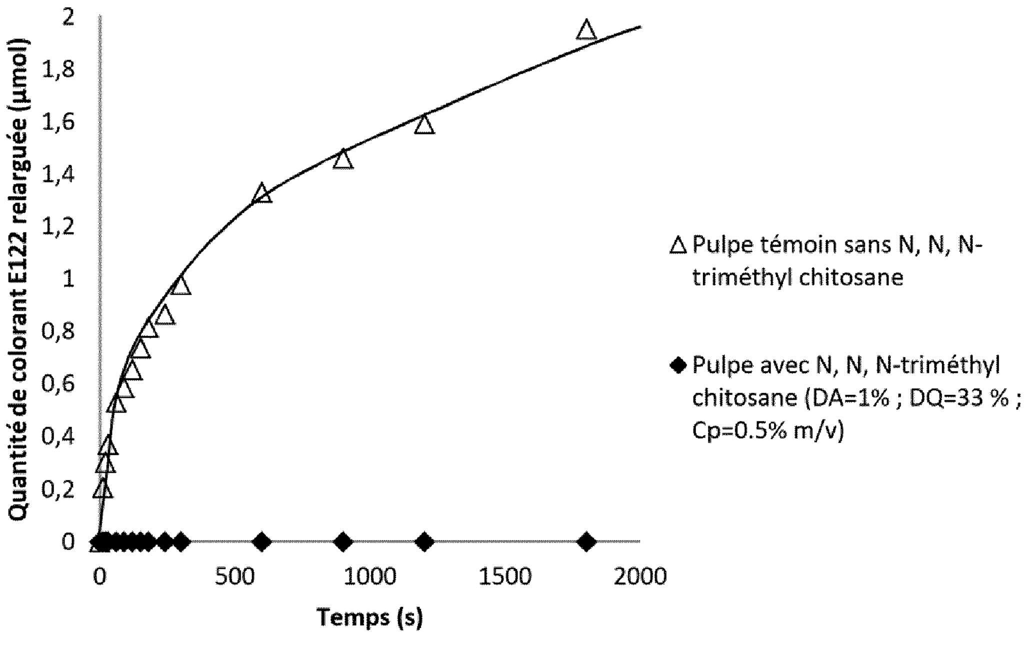


**Figure 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2007054452 A
- WO 2004035925 A
- WO 2003010206 A
- US 20010003778 A


### Littérature non-brevet citée dans la description


- *CHEMICAL ABSTRACTS,* 9002-98-6
- *CHEMICAL ABSTRACTS,* 77-78-1
- *CHEMICAL ABSTRACTS,* 3033-77-0
- *CHEMICAL ABSTRACTS,* 108-24-7